# FASCICULE DE BREVET EUROPEEN

(11) **EP 3 299 699 B1**
(45) Date de publication et mention de la délivrance du brevet: **20.02.2019**
(21) Numéro de dépôt: 16190173.1
(22) Date de dépôt: 22.09.2016
(51) Int. Cl.: F21S 9/02, F21V 21/04, G09F 13/18

(54) **BOÎTIER D'ENCASTREMENT ET BLOC AUTONOME D'ÉCLAIRAGE DE SÉCURITÉ COMPORTANT UN TEL BOÎTIER D'ENCASTREMENT**
EINBAUGEHÄUSE UND AUTONOMEN SICHERHEIT LICHTBLOCK MIT EINER SOLCHEN GEHÄUSE
RECESSED TYPE HOUSING UNIT AND AUTONOMOUS SAFETY LIGHT BLOCK COMPRISING SUCH A HOUSING

(43) Date de publication de la demande: 28.03.2018
(73) Titulaire: KAUFEL, 89330 Piffonds (FR)
(72) Inventeur: BENTO, Julien, 89330 VERLIN (FR)
(74) Mandataire: Hugues, Catherine

(56) Documents cités:
- EP-A2- 0 268 283
- WO-A1-2012/162343
- US-A- 5 314 148
- US-A1- 2014 026 495

## Description

La présente invention a pour objet un boîtier d'encastrement apte à être encastré derrière un orifice formé dans une cloison, telle que notamment un mur ou un faux-plafond, ledit boîtier comportant une paroi périphérique délimitant au moins une ouverture destinée à communiquer avec ledit orifice, ladite paroi périphérique étant pourvue, sur sa face externe, d'ailettes élastiques mobiles entre une position écartée de la face externe dans laquelle elles permettent de bloquer le boîtier en position dans ledit orifice et une position rabattue contre la face externe de la paroi périphérique dans laquelle elles permettent le passage dudit boîtier à travers ledit orifice, ledit boîtier comportant en outre des moyens de réglage en hauteur desdites ailettes élastiques.

La présente invention concerne également l'utilisation d'un tel boîtier d'encastrement pour la connexion électrique d'un bloc autonome d'éclairage de sécurité ainsi qu'un bloc autonome d'éclairage de sécurité comportant un panneau informatif supportant un élément visuel d'information tel qu'un pictogramme et des moyens d'éclairage lumineux dudit panneau connectés à des moyens d'alimentation électrique au moyen d'un tel boîtier d'encastrement.

De nombreux modèles de boîtiers d'encastrement sont d'ores et déjà disponibles sur le marché actuellement. Ils se distinguent les uns des autres notamment par leur forme ou leurs dimensions et présentent généralement des caractéristiques structurelles spécifiquement adaptées à une implantation dans un type particulier de cloison. La plupart d'entre eux comportent des moyens permettant de les immobiliser à l'intérieur de l'orifice dans lequel ils ont été encastrés, de sorte à garantir à la fois la stabilité du dispositif électrique auquel ils sont susceptibles de servir de support, ainsi que la fiabilité de la connexion électrique qui y est réalisée entre un tel dispositif électrique et un moyen d'alimentation électrique de ce dispositif.

Ainsi, on connaît par exemple un modèle de boîtier d'encastrement comportant à cet effet une pluralité d'étriers de fixation répartis autour de la face externe de sa paroi périphérique et qui sont aptes à être écartés de cette dernière pour prendre appui sur les bords de l'orifice à l'arrière duquel le boîtier a été positionné, en vue de l'immobiliser. Cette solution ne donne néanmoins pas entière satisfaction, notamment en raison du fait qu'elle ne convient pas à n'importe quel type de cloison et qu'il est fréquemment constaté que le boîtier d'encastrement est instable et sujet à des déplacements intempestifs dans son orifice lorsqu'il est manipulé, de sorte qu'un ancrage convenable du dispositif électrique qui lui est finalement associé ne peut être garanti.

Les documents US 2014/026495 et EP 0 268 283 décrivent chacun un boîtier d'encastrement destiné à pallier ce type d'inconvénient, comportant à cet effet des ailettes élastiques réglables en hauteur le long du boîtier entre une position de verrouillage et une position de déverrouillage.

Un objet de la présente invention est par conséquent de proposer une nouvelle solution permettant d'assurer une parfaite immobilisation d'un boîtier d'encastrement derrière un orifice formé dans une paroi, et ce quelle que soit le type de paroi et l'épaisseur de cette dernière, de sorte à garantir également une excellente implantation de tout type de dispositif électrique susceptible d'être solidarisé, d'une manière ou d'une autre, à ce boîtier d'encastrement.

Par ailleurs, de manière classique, de tels boîtiers d'encastrement sont notamment mis en oeuvre dans le domaine des dispositifs de blocs autonomes d'éclairage de sécurité qui comportent communément un panneau informatif éclairé par des moyens d'éclairage alimentés via des moyens de connexion électrique contenus dans un boîtier encastré dans une cloison.

En général, dans un tel contexte, il est d'abord procédé à une installation du boîtier d'encastrement dans ladite cloison, au niveau d'une arrivée pour le raccordement électrique. Puis, après avoir connecté les moyens d'éclairage à ladite arrivée, le panneau informatif du bloc autonome d'éclairage de sécurité est fixé sur le boîtier d'encastrement bloqué en position dans la cloison.

En fait, les blocs autonomes d'éclairage de sécurité commercialisés par les différents fabricants se déclinent en une gamme plus ou moins large, comportant des produits se différenciant les uns des autres notamment par leur aspect et leurs spécificités techniques. Habituellement, les caractéristiques finales des différents modèles de blocs autonomes d'éclairage de sécurité disponibles actuellement sont déterminées en usine, de manière définitive. En effet, il est classiquement prévu, pour obtenir un type donné de bloc autonome d'éclairage de sécurité, d'associer un modèle de panneau informatif avec un type de boîtier encastrable qui lui est spécifiquement dédié.

Un tel procédé de fabrication, impliquant de disposer d'une pluralité d'éléments de base différents, assemblés entre eux pour obtenir une gamme de produits, ne donne pas entière satisfaction car il se révèle inévitablement fastidieux, chronophage et par conséquent coûteux.

Par ailleurs, la structure même de tels blocs autonomes d'éclairage de sécurité, dans laquelle après leur fabrication, un panneau informatif d'un certain type est indissociable d'un boîtier encastrable donné, sous peine de perdre les caractéristiques techniques souhaitées dudit bloc d'éclairage de sécurité considéré, manque de praticité. En effet, une telle structure ne permet aucune interchangeabilité des différents éléments constitutifs de tels blocs d'éclairage lors de leur installation sur un site, et suppose en outre, lors de cette opération, pour chaque bloc d'éclairage, de séparer d'abord le panneau informatif de sa base encastrable, afin de pouvoir implanter celle-ci dans la cloison retenue puis de réassocier ce même panneau informatif à la base encastrable une fois fixée dans la cloison.

Compte tenu de ce qui précède, un autre objet de la présente invention est par conséquent d'optimiser et de simplifier à la fois la fabrication et les opérations d'installation/désinstallation sur site de blocs autonomes d'éclairage de sécurité, en prévoyant notamment la possibilité d'utiliser des boîtiers d'encastrement identiques, quel que soit le modèle et les caractéristiques techniques du panneau informatif susceptible de lui être associé. L'objectif final étant de pouvoir équiper dans un premier temps, au cours d'une première opération, l'ensemble d'un site en boîtiers d'encastrement standards fiables et robustes sur lesquels il suffit ensuite, dans un second temps, de venir fixer à chaque fois un panneau informatif du modèle de son choix, ceci ayant pour conséquence de permettre une installation notablement plus rapide des blocs autonomes d'éclairage de sécurité.

Ainsi, afin d'atteindre une partie des buts fixés ci-dessus, la présente invention propose un boîtier d'encastrement apte à être encastré derrière un orifice formé dans une cloison, telle que notamment un mur ou un faux-plafond, ledit boîtier comportant une paroi périphérique délimitant au moins une ouverture destinée à communiquer avec ledit orifice, ladite paroi périphérique étant pourvue, sur sa face externe, d'ailettes élastiques mobiles entre une position écartée de la face externe dans laquelle elles permettent de bloquer le boîtier en position dans ledit orifice et une position rabattue contre la face externe de la paroi périphérique dans laquelle elles permettent le passage dudit boîtier à travers ledit orifice, lesdites ailettes élastiques comportant un bord inférieur apte à être positionné à une distance prédéterminée d'une collerette bordant ladite ouverture, au travers des moyens de réglage en hauteur que comporte ledit boîtier d'encastrement, chacune desdites ailettes élastiques étant reliée à un curseur monté mobile en translation dans une coulisse, d'axe parallèle à l'axe du boîtier d'encastrement, et s'étendant sur la face externe de la paroi périphérique dudit boîtier d'encastrement, tandis que les moyens de réglage en hauteur comportent une graduation et un repère respectivement formés le long de la coulisse et sur ledit curseur, caractérisé en ce ladite coulisse présente un fond délimité par deux parois latérales en « L » dont les petites branches sont orientées vers l'intérieur de la coulisse de sorte à former avec ledit fond deux rails en « U », tandis que le curseur présente une section en « Ω » et comporte une face de manipulation présentant un chant supérieur, un chant inférieur et deux bords longitudinaux prolongés chacun par une patte longitudinale apte à être reçue dans un des rails en « U » de la coulisse.

Les autres buts de l'invention sont atteints au travers d'une utilisation du boîtier d'encastrement selon l'invention pour la connexion électrique de moyens d'éclairage lumineux d'un bloc autonome d'éclairage de sécurité, et au travers d'un bloc autonome d'éclairage de sécurité comportant un panneau informatif supportant un élément visuel d'information tel qu'un pictogramme et des moyens d'éclairage lumineux dudit panneau, caractérisé en ce qu'il comporte un boîtier d'encastrement selon l'invention destiné à héberger des moyens de connexion électrique desdits moyens d'éclairage lumineux.

La présente invention sera mieux comprise à la lecture de la description d'exemples de réalisation de blocs autonomes d'éclairage de sécurité selon l'invention, faite en référence aux figures annexées, dans lesquelles :
- La figure 1 illustre une vue en perspective d'un bloc autonome d'éclairage de sécurité selon l'invention, destiné à être fixé contre le plafond d'un local,
- La figure 2 illustre une vue en perspective du boîtier d'encastrement du bloc autonome d'éclairage de sécurité de la figure 1,
- La figure 3 illustre de manière schématique différentes étapes (a)-(d) de l'installation contre le plafond d'un local du bloc autonome d'éclairage de sécurité de la figure 1.

Dans la variante de réalisation illustrée aux figures, le bloc autonome d'éclairage de sécurité 1 selon l'invention est destiné à être suspendu à une cloison 10 de faux-plafond. Il comporte de manière classique un panneau informatif 2, pouvant se présenter sous la forme d'une coque, par exemple de forme parallélépipédique, définissant un logement interne, réalisée en un matériau transparent, et comportant une fente pour l'introduction, dans ledit logement interne, d'un pictogramme indiquant par exemple la direction d'une issue de secours la plus proche.

Un tel panneau informatif 2 est destiné à être éclairé par le dessus, par des moyens d'éclairage lumineux, tels que par exemple une rangée de diodes électroluminescentes (non illustrées) s'étendant le long du bord supérieur du panneau 2, à l'intérieur d'une barre 3, sur laquelle ledit panneau 2 est fixé, par exemple par vissage. Il est également à noter que la barre 3 comporte ici une zone centrale 30 creuse, d'allure circulaire, équipée d'un voyant lumineux 31 dont la couleur est représentative d'un état de fonctionnement et apte à héberger une partie des moyens de connexion électrique du bloc d'éclairage de sécurité 1. De manière classique, les diodes électroluminescentes sont reliées à une alimentation électrique 5 installée à l'emplacement considéré du plafond, au moyen d'un bornier de raccordement 6, logé dans un boîtier d'encastrement 4 préalablement bloqué en position derrière un orifice 7 formé dans la cloison 10 formant le faux-plafond, et sur lequel la barre 3 est fixée, par exemple par emboîtement d'éléments de forme complémentaire.

Par ailleurs, selon une caractéristique avantageuse de l'invention, la barre 3 hébergeant les diodes électroluminescentes peut comporter, logés dans sa zone centrale creuse 30, des moyens électroniques d'identification et de transmission d'informations relatives aux caractéristiques techniques du panneau informatif 2 vers le bornier de raccordement 6. Ceci permet d'utiliser, lors de l'installation d'une pluralité de blocs autonomes d'éclairage de sécurité 1 dans un bâtiment, un seul et même type de boîtier d'encastrement 4, quel que soit le modèle et les caractéristiques techniques du panneau informatif 2, celles-ci étant définies par lesdits moyens d'identification et de transmission d'informations. Ainsi, grâce à cette caractéristique, il est possible d'installer lors d'une première étape, l'ensemble des boîtiers d'encastrement nécessaires au raccordement des différents panneaux informatifs, quelles que soient les fonctions techniques prévues pour ces derniers.

Dans la variante de réalisation illustrée, le boîtier d'encastrement 4 comporte une paroi périphérique 40 délimitant une ouverture 41 destinée à communiquer avec l'orifice 7 formé dans la cloison 10. La paroi périphérique 40 présente, sur sa face externe 43, une pluralité d'ailettes élastiques 42 en matériau plastique ou équivalent, par exemple de forme triangulaire, mobiles entre une position de repos dans laquelle elles sont écartées de la face externe 43 et une position contrainte dans laquelle elles sont rabattues contre la face externe 43 de la paroi périphérique 40.

En fait, la position contrainte des ailettes élastiques 42 permet le passage du boîtier d'encastrement 4 à travers l'orifice 7 formé dans la cloison 10 en vue de l'introduire dans cet orifice 7 ou de l'en extraire. Après l'introduction complète du boîtier d'encastrement 4 derrière l'orifice 7, les ailettes élastiques 42 se déploient et retrouvent leur position au repos, dans laquelle elles sont écartées de la face externe 43 du boîtier d'encastrement 4. Elles peuvent alors prendre appui sur la face supérieure 11 de la cloison 10 pour bloquer le boîtier d'encastrement 4 en position. Ce dernier comporte à ce propos une collerette 44 bordant l'ouverture 41, de sorte que dans la position bloquée en position du boîtier d'encastrement 4, la cloison 10 se trouve prise en sandwich entre un bord inférieur 12 que comporte chaque languette élastique 42 et la collerette 44.

Etant donné qu'en fonction des caractéristiques recherchées du faux-plafond, l'épaisseur de la cloison 10 le constituant peut varier, il a été prévu dans le cadre de la présente invention, des moyens de réglage en hauteur des ailettes 42, le long de la face externe 43 de la paroi périphérique 40 du boîtier d'encastrement 4. Ces moyens de réglage en hauteur sont conçus de manière telle qu'ils permettent de positionner le bord inférieur 12 de chaque ailette élastique 42 à une distance prédéterminée de la collerette 44. Ceci permet de garantir que quelle que soit l'épaisseur de la cloison 10, aucun jeu ne peut survenir entre cette dernière, le bord inférieur 12 de chaque languette élastique 42, et la collerette 44.

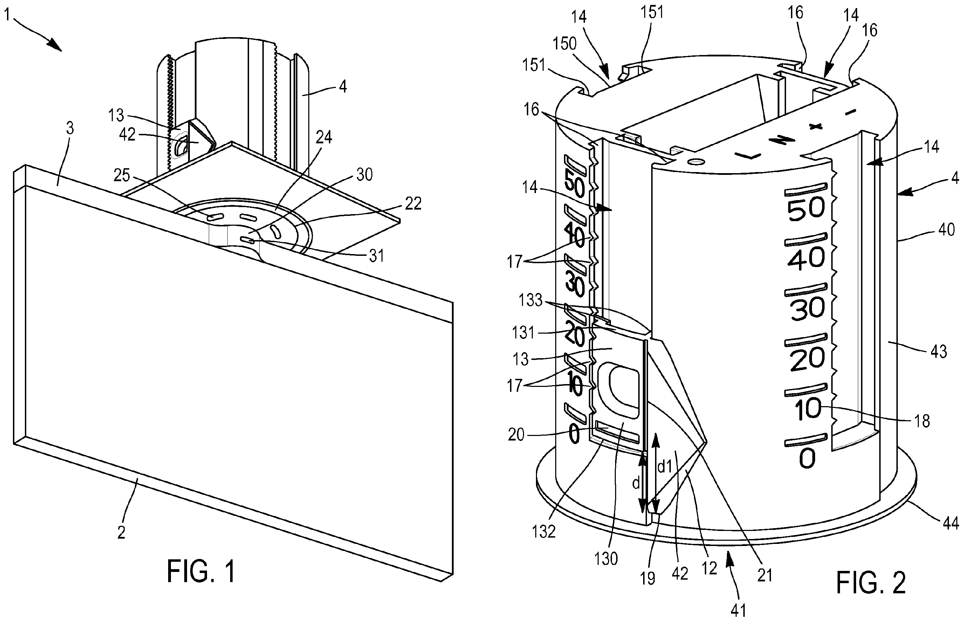

En référence à la figure 2, la présente invention prévoit qu'à cet effet, chacune desdites ailettes élastiques 42 est formée d'un seul tenant avec un curseur 13 monté mobile en translation dans une coulisse 14, s'étendant sur la face externe 43 de la paroi périphérique 40 du boîtier d'encastrement 4, selon un axe parallèle à l'axe de ce dernier.

Dans la variante de réalisation illustrée aux figures, la coulisse 14 présente un fond 15 délimité par deux parois latérales en « L » dont les petites branches sont orientées vers l'intérieur de la coulisse 14 de sorte à former, avec le fond 15, deux rails en « U » 16.

Par ailleurs, le curseur 13 présente une section en « Ω » et comporte une face de manipulation 130 présentant un chant supérieur 131, un chant inférieur 132 et deux bords longitudinaux prolongés chacun par une patte longitudinale 133 apte à être reçue dans un des rails en « U » 16 de la coulisse 14.

Cette dernière est complétée par une graduation 18 couplée à une série de crans 17 s'étendant le long d'un des rails en « U » 16, lesdits crans 17 étant représentatifs d'une épaisseur de cloison 10 donnée, et permettant de sélectionner la hauteur correspondante des ailettes élastiques 42, en alignant sur le cran 17 sélectionné, un repère 20 que comporte la face de manipulation 130 du curseur 13.

Il convient également de noter que le fond 15 de la coulisse 14 est préférentiellement configuré de manière telle qu'il comporte une bande centrale longitudinale 150 plane bordée par deux bandes latérales longitudinales 151 renfoncées par rapport à la bande centrale 150. Une telle structure permet de faciliter le déplacement, le long de la coulisse 14, du curseur 13, ainsi apte à être écarté, en étant poussé par un opérateur vers le fond 15, de la série de crans 17 prenant appui sur la face de manipulation 130 lorsque celle-ci n'est pas manipulée par l'opérateur, et bloquant ainsi le curseur dans la position sélectionnée.

De plus, dans la variante de réalisation illustrée, chaque ailette élastique 42 s'étend dans le prolongement d'un des bords longitudinaux de la face de manipulation 130 du curseur 13 et présente un sommet 19 s'étendant à une certaine distance d du chant inférieur 132 de la face de manipulation 130 dudit curseur 13, et par conséquent à une distance dl du repère 20 que comporte la face de manipulation 130 du curseur 13. Ce sommet 19 est adjacent au bord inférieur 12 de chaque ailette élastique 42 destiné à prendre appui sur la face supérieure de la cloison 10 du faux-plafond. Ainsi, le fait de régler la hauteur de chaque ailette élastique 42 consiste en réalité pour un opérateur à régler la distance d1.

En outre, le caractère mobile de chaque ailette élastique 42 est obtenu par la présence d'une rainure longitudinale 21 formée entre chaque ailette élastique 42 et le curseur 13 dans le prolongement duquel elle est formée.

Grâce à la structure du bloc autonome d'éclairage de sécurité 1 qui vient d'être décrite, son installation dans un orifice 7 d'une cloison 10, notamment d'un faux-plafond, est très simple et particulièrement rapide puisqu'il a été observé qu'elle peut être réalisé en seulement deux minutes.

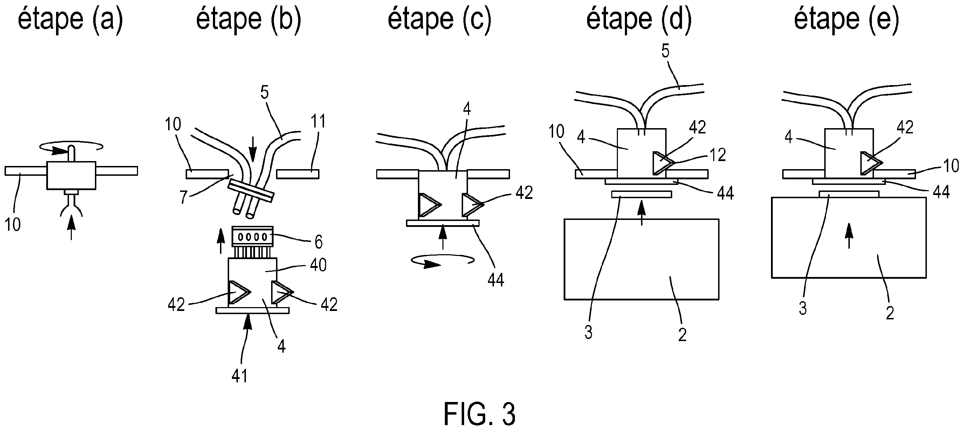

Ainsi, conformément à la figure 3, cette installation suppose de former d'abord l'orifice 7 dans la cloison 10 au moyen d'une scie-cloche (étape (a)). Le bornier de raccordement 6, hébergé par le boîtier d'encastrement 4, peut ensuite être raccordé à l'alimentation électrique 5 émergeant de l'orifice 7 (étape (b)). Puis, le boîtier d'encastrement 4 est progressivement introduit à travers l'orifice 7, moyennant un mouvement de rotation, permettant aux ailettes élastiques 42, du fait de leur forme triangulaire, de se plaquer contre la paroi périphérique 40 du boîtier 4 lorsqu'elles arrivent au contact de la cloison 10 (étape (c)). Lorsque le boîtier d'encastrement 4 est correctement positionné dans l'orifice 7, la collerette 44 est au contact de la face inférieure de la cloison 10, les ailettes élastiques 42, préalablement réglées à une hauteur adéquate par rapport à l'épaisseur de cette cloison 10, se re-déploient et retrouvent leur position au repos pour prendre appui sur la face supérieure 11 de la cloison 10. Le boîtier de raccordement 4 est ainsi fermement bloqué en position, excluant tout jeu susceptible d'entraîner ultérieurement une fixation insatisfaisante du bloc autonome d'éclairage de sécurité 1. Le panneau informatif 2 est ensuite solidarisé à la barre 3, par exemple par vissage (étape (d), puis la barre 3, équipée de la rangée de diodes électroluminescentes et des moyens d'identification et de transmission d'informations relatives aux caractéristiques techniques du panneau informatif 2, est fixée sur le boîtier de raccordement 4 (étape (e).

La présente invention prévoit en outre d'obturer l'ouverture 41 du boîtier d'encastrement 4 au moyen d'un cache 22 surmontant la barre 3 et le panneau informatif 2. Selon une variante de réalisation préférentielle, ce cache 22 présente une forme spécifiquement étudiée pour diffuser la lumière émise par les moyens d'éclairage lumineux sous la forme d'un anneau s'étendant autour du panneau informatif 2. A cet effet, le cache 22 peut présenter une forme de coupelle réalisée en un matériau de couleur prédéterminée, par exemple blanche, dont la partie creuse est orientée en direction du panneau informatif 2, et comportant un fond 23 bordé par une paroi périphérique 24. Par ailleurs, une amélioration de la répartition de la lumière émise par les diodes électroluminescentes autour du panneau informatif 2 est encore obtenue en prévoyant, sur le fond 23 du cache 22, une pluralité de trous 25, de préférence de forme oblongue, uniformément répartis autour de la paroi périphérique 24 dudit cache 22.

Dans un même objectif d'amélioration de la répartition des rayons lumineux diffusés par les diodes électroluminescentes autour du panneau informatif 2, il peut être prévu de compléter le cache 22 par un organe en forme de dôme réalisé en un matériau translucide tel que par exemple du verre dépoli, et recouvrant ledit cache 22.

## Revendications

1. Boîtier d'encastrement (4) apte à être encastré derrière un orifice (7) formé dans une cloison (10), telle que notamment d'un mur ou d'un faux-plafond, ledit boîtier d'encastrement (4) comportant une paroi périphérique (40) délimitant au moins une ouverture (41) destinée à communiquer avec ledit orifice (7), ladite paroi périphérique (40) étant pourvue, sur sa face externe (43), d'ailettes élastiques (42) mobiles entre une position écartée de la face externe (43) dans laquelle elles permettent de bloquer le boîtier d'encastrement (4) en position derrière ledit orifice (7) et une position rabattue contre la face externe (43) de la paroi périphérique (40) dans laquelle elles permettent le passage dudit boîtier d'encastrement (4) à travers ledit orifice (7), lesdites ailettes élastiques (42) comportant un bord inférieur (12) apte à être positionné à une distance prédéterminée d'une collerette (44) bordant ladite ouverture (41), au travers des moyens de réglage en hauteur que comporte ledit boîtier d'encastrement (4), chacune desdites ailettes élastiques (42) étant reliée à un curseur (13) monté mobile en translation dans une coulisse (14), d'axe parallèle à l'axe du boîtier d'encastrement (4), et s'étendant sur la face externe (43) de la paroi périphérique (40) dudit boîtier d'encastrement (4), tandis que les moyens de réglage en hauteur comportent une graduation (18) et un repère (20) respectivement formés le long de la coulisse (14) et sur ledit curseur (13), **caractérisé en ce que** ladite coulisse (14) présente un fond (15) délimité par deux parois latérales en « L » dont les petites branches sont orientées vers l'intérieur de la coulisse (14) de sorte à former avec ledit fond (15) deux rails en « U » (16), tandis que le curseur (13) présente une section en « Ω » et comporte une face de manipulation (130) présentant un chant supérieur (131), un chant inférieur (132) et deux bords longitudinaux prolongés chacun par une patte longitudinale (133) apte à être reçue dans un des rails en « U » (16) de la coulisse (14).

2. Boîtier d'encastrement (4) selon la revendication 1, **caractérisé en ce que** le fond (15) de la coulisse (14) présente une bande centrale longitudinale plane (150) bordée par deux bandes latérales longitudinales (151) renfoncées par rapport à la bande centrale.

3. Boîtier d'encastrement (4) selon l'une quelconque des revendications 1 ou 2, **caractérisé en ce que** chaque ailette élastique (42) est formée d'un seul tenant avec un curseur (13) et présente une forme de triangle s'étendant dans le prolongement d'un des bords longitudinaux de la face de manipulation (130) dudit curseur (13), ledit triangle présentant un sommet (19) s'étendant à une certaine distance d du chant inférieur (132) de ladite face de manipulation (130).

4. Boîtier d'encastrement (4) selon la revendication 3, **caractérisé en ce que** l'ensemble formé par une ailette élastique (42) et un curseur (13) comporte une rainure (21) s'étendant le long du bord longitudinal du curseur (13) dans le prolongement duquel s'étend ladite ailette élastique (42).

5. Utilisation du boîtier d'encastrement (4) selon l'une quelconque des revendications 1 à 4 pour la connexion électrique de moyens d'éclairage lumineux d'un bloc autonome d'éclairage de sécurité (1).

6. Bloc autonome d'éclairage de sécurité (1) comportant un panneau informatif (2) supportant un élément visuel d'information tel qu'un pictogramme et des moyens d'éclairage lumineux dudit panneau informatif (2), **caractérisé en ce qu'**il comporte un boîtier d'encastrement (4) selon l'une quelconque des revendications 1 à 4 destiné à héberger des moyens de connexion électrique desdits moyens d'éclairage lumineux.

7. Bloc autonome d'éclairage de sécurité (1) selon la revendication 6, **caractérisé en ce que** lesdits moyens d'éclairage lumineux sont hébergés par une barre (3) fixée sur ledit boîtier d'encastrement (4) et supportant ledit panneau informatif (2), et **en ce que** ladite barre (3) est équipée de moyens de transmission d'informations relatives aux caractéristiques techniques du panneau informatif (2) vers ledit boîtier d'encastrement (4).

8. Bloc autonome d'éclairage de sécurité (1) selon l'une quelconque des revendications 6 ou 7, **caractérisé en ce que** l'ouverture (41) dudit boîtier d'encastrement (4) est obturée au moyen d'un cache (22) surmontant ledit panneau informatif (2), ledit cache (22) étant configuré pour diffuser la lumière émise par les moyens d'éclairage lumineux en un anneau s'étendant autour dudit panneau informatif (2).

9. Bloc autonome d'éclairage de sécurité (1) selon la revendication 8, **caractérisé en ce que** ledit cache (22) présente une forme de coupelle comportant un fond (23) bordé par une paroi périphérique (24) et est réalisé en un matériau de couleur prédéterminée.

10. Bloc autonome d'éclairage de sécurité (1) selon la revendication 9, **caractérisé en ce que** le fond (23) du cache (22) comporte une pluralité de trous (25) uniformément répartis autour de la paroi périphérique (24) dudit cache (22).

11. Bloc autonome d'éclairage de sécurité (1) selon la revendication 10, **caractérisé en ce que** lesdits trous (25) présentent une forme oblongue.

## Patentansprüche

1. Einbaugehäuse (4), das ausgelegt ist, um hinter einer Mündung (7) eingebaut zu sein, die in einer Trennwand (10) gebildet ist, wie z. B. insbesondere einer Mauer oder einer Zwischendecke, wobei das Einbaugehäuse (4) eine periphere Wand (40) umfasst, die mindestens eine Öffnung (41) begrenzt, die dazu vorgesehen ist, mit der Mündung (7) zu kommunizieren, wobei die Umfangswand (40) auf ihrer äußeren Seite (43) mit elastischen Flügeln (42) versehen ist, die zwischen einer von der äußeren Seite (43) entfernten Position, in der sie ermöglichen, das Einbaugehäuse (4) in seiner Position hinter der Mündung (7) zu blockieren, und einer gegen die äußere Seite (43) der peripheren Wand (40) abgesenkten Position beweglich sind, in der sie den Durchgang des Einbaugehäuses (4) durch die Mündung (7) ermöglichen, wobei die elastischen Flügel (42) einen unteren Rand (12) umfassen, der ausgelegt ist, um in einem vorbestimmten Abstand von einem Kragen (44), der die Öffnung (41) einfasst, mit Hilfe der Mittel zur Einstellung der Höhe, die das Einbaugehäuse (4) umfasst, positioniert zu sein, wobei jeder der elastischen Flügel (42) mit einem Schieber (13) verbunden ist, der beweglich in Translation in einer Führungsschiene (14) mit einer Achse parallel zur Achse des Einbaugehäuses (4) montiert ist und sich auf der äußeren Seite (43) der peripheren Wand (40) des Einbaugehäuses (4) erstreckt, während die Mittel zur Einstellung der Höhe eine Abstufung (18) und eine Markierung (20) umfassen, die jeweils entlang der Führungsschiene (14) und auf dem Schieber (13) gebildet sind, **dadurch gekennzeichnet, dass** die Führungsschiene (14) einen Boden (15) aufweist, der von zwei seitlichen Wänden in Form eine "L" begrenzt ist, wobei die kleinen Schenkel hin zum Inneren der Führungsschiene (14) gerichtet sind, um mit dem Boden (15) zwei Schienen in Form eines "U" (16) zu bilden, während der Schieber (13) einen Abschnitt in Form eines "Q" aufweist und eine Handhabungsseite (130) umfasst, die eine obere Kante (13), eine untere Kante (132) und zwei längsgerichtete Ränder aufweist, die jeweils durch einen längsgerichteten Fuß (133) verlängert sind, der ausgelegt ist, um in einer der Schienen in Form eines "U" (16) der Führungsschiene (14) aufgenommen zu sein.

2. Einbaugehäuse (4) nach Anspruch 1, **dadurch gekennzeichnet, dass** der Boden (15) der Führungsschiene (14) ein ebenes, längsgerichtetes zentrales Band (150) aufweist, das von zwei längsgerichteten seitlichen Bändern (151) eingefasst ist, die mit Bezug auf das zentrale Band verstärkt sind.

3. Einbaugehäuse (4) nach einem beliebigen der Ansprüche 1 oder 2, **dadurch gekennzeichnet, dass** jeder elastische Flügel (42) aus einem einzigen Stück mit einem Schieber (13) gebildet ist und die Form eines Dreiecks aufweist, das sich in der Verlängerung eines der längsgerichteten Ränder der Handhabungsseite (130) des Schiebers (13) erstreckt, wobei das Dreieck einen Scheitel (19) aufweist, der sich in einem gewissen Abstand d von der unteren Kante (132) der Handhabungsseite (130) erstreckt

4. Einbaugehäuse (4) nach Anspruch 3, **dadurch gekennzeichnet, dass** die Einheit, gebildet aus dem elastischen Flügel (42) und einem Schieber (13) eine Nut (21) entlang dem längsgerichteten Rand des Schiebers (13) umfasst, in dessen Verlängerung sich der elastische Flügel (42) erstreckt.

5. Verwendung des Einbaugehäuses (4) nach einem beliebigen der Ansprüche 1 bis 4, für die elektrische Verbindung von Mitteln zur lichtstarken Beleuchtungeines autonomen Blocks zur Sicherheitsbeleuchtung (1).

6. Autonomer Block zur Sicherheitsbeleuchtung (1), umfassend eine Informationstafel (2), die ein visuelles Informationselement wie z. B. ein Piktogramm und Mittel zur lichtstarken Beleuchtung der Informationstafel (2) umfasst, **dadurch gekennzeichnet, dass** er ein Einbaugehäuse (4) nach einem beliebigen der Ansprüche 1 oder 4 umfasst, das ausgelegt ist, um Mittel zur elektrischen Verbindung der Mittel zur lichtstarken Beleuchtung aufzunehmen.

7. Autonomer Block zur Sicherheitsbeleuchtung (1) nach Anspruch 6, **dadurch gekennzeichnet, dass** die Mittel zur lichtstarken Beleuchtung durch eine Stange (3) auf dem Einbaugehäuse (4) aufgenommen sind und die Informationstafel (2) tragen, und dadurch, dass die Stange (3) mit Mitteln zur Übertragung von Informationen mit Bezug auf die technischen Eigenschaften der Informationstafel (2) hin zu dem Einbaugehäuse (4) ausgestattet ist.

8. Autonomer Block zur Sicherheitsbeleuchtung (1) einem beliebigen der Ansprüche 6 oder 7, **dadurch gekennzeichnet, dass** die Öffnung (41) des Einbaugehäuses (4) mit Hilfe einer Maske (22) verschlossen ist, das die Informationstafel (2) überragt, wobei die Maske (22) konfiguriert ist, um das Licht, das von den Mitteln zur lichtstarken Beleuchtung emittiert wird, in einem Ring zu streuen, der sich um die Informationstafel (2) erstreckt.

9. Autonomer Block zur Sicherheitsbeleuchtung (1) nach Anspruch 8, **dadurch gekennzeichnet, dass** die Maske (22) die Form eines Tellers aufweist, der einen Boden (23) umfasst, der von einer seitlichen Wand (24) eingefasst ist und aus einem Material mit einer vorbestimmten Farbe hergestellt ist.

10. Autonomer Block zur Sicherheitsbeleuchtung (1) nach Anspruch 9, **dadurch gekennzeichnet, dass** der Boden (23) der Maske (22) eine Vielzahl von Löchern (25) umfasst, die gleichförmig um die periphere Wand (24) der Maske (22) verteilt ist.

11. Autonomer Block zur Sicherheitsbeleuchtung (1) nach Anspruch 10, **dadurch gekennzeichnet, dass** die Löcher (25) eine verlängerte Form aufweisen.

## Claims

1. A recessed housing (4) able to be embedded behind an orifice (7) formed in a partition (10), in particular a wall or a drop ceiling, said recessed housing (4) including a peripheral wall (40) delimiting at least one opening (41) intended to communicate with said orifice (7), said peripheral wall (40) being provided, on its outer face (43), with resilient fins (42) movable between a position separated from the outer face (43) in which they make it possible to lock the recessed housing (4) in position behind said orifice (7) and a position folded down against the outer face (43) of the peripheral wall (40) in which they allow the passage of the recessed housing (4) through said orifice (7), said resilient fins (42) including a lower edge (12) able to be positioned at a predetermined distance from a flange (44) bordering said opening (41), through height adjustment means included by said recessed housing (4), each of said resilient fins (42) being connected to a slider (13) mounted in translation in a slide (14), with an axis parallel to the axis of the recessed housing (4), and extending over the outer face (43) of the peripheral wall (40) of said recessed housing (4), while the height adjustment means include a graduation (18) and a marker (20) that are respectively formed along the slide (14) and on said slider (13), **characterized in that** said slide (14) has a bottom (15) delimited by two L-shaped side walls, the small branches of which are oriented toward the inside of the slide (14) so as to form, with said bottom (15), two U-shaped rails (16), while the slider (13) has an Ω-shaped section and includes a manipulation surface (130) having an upper rim (131), a lower rim (132) and two longitudinal edges each extended by a longitudinal tab (133) able to be received in one of the U-shaped rails (16) of the slide (14).

2. The recessed housing (4) according to claim 1, **characterized in that** the bottom (15) of the slide (14) has a planar longitudinal central strip (150) bordered by two longitudinal side strips (151) that are recessed relative to the central strip.

3. The recessed housing (4) according to any one of claims 1 or 2, **characterized in that** each resilient fin (42) is formed in one piece with a slider (13) and has a triangular shape extending in the extension of one of the longitudinal edges of the manipulation
face (130) of said slider (13), said triangle having an apex (19) extending at a certain distance d from the lower rim (132) of said manipulation face (130).

4. The recessed housing (4) according to claim 3, **characterized in that** the assembly formed by a resilient fin (42) and a slider (13) includes a groove (21) extending along the longitudinal edge of the slider (13) in the extension of which said resilient fin (42) extends.

5. The use of the recessed housing (4) according to any one of claims 1 to 4 for the electrical connection of light illumination means for an autonomous safety light unit (1).

6. An autonomous safety light unit (1) including an informational panel (2) bearing a visual information element such as a pictogram and light illumination means for said informational panel (2), **characterized in that** it includes a recessed housing (4) according to any one of claims 1 to 4 intended to house electrical connection means for said light illumination means.

7. The autonomous safety light unit (1) according to claim 6, **characterized in that** said light illumination means are housed by a strip (3) fastened on said recessed housing (4) and bearing said informational panel (2), and **in that** said strip (3) is equipped with means for transmitting information relative to the technical characteristics of the informational panel (2) to said recessed housing (4).

8. The autonomous safety light unit (1) according to any one of claims 6 or 7, **characterized in that** the opening (41) of said recessed housing (4) is closed off using a cover (22) topping said informational panel (2), said cover (22) being configured to diffuse the light emitted by the light illumination means in a ring extending around said informational panel (2).

9. The autonomous safety light unit (1) according to claim 8, **characterized in that** said cover (22) is in the form of a cup including a bottom (23) bordered by a peripheral wall (24) and is made from a material with a predetermined color.

10. The autonomous safety light unit (1) according to claim 9, **characterized in that** the bottom (23) of the cover (22) includes a plurality of holes (25) uniformly distributed around the peripheral wall (24) of said cover (22).

11. The autonomous safety light unit (1) according to claim 10, **characterized in that** said holes (25) have an oblong shape.
